# EUROPÄISCHE PATENTSCHRIFT

(11) **EP 3 260 826 B1**
(45) Veröffentlichungstag und Bekanntmachung des Hinweises auf die Patenterteilung: **25.12.2024**
(21) Anmeldenummer: 17174882.5
(22) Anmeldetag: 08.06.2017
(51) Int. Cl.: G01F 25/10, G01F 15/075

(54) **VERFAHREN ZUM BETREIBEN EINES DURCHFLUSSMESSGERÄTS UND DURCHFLUSSMESSGERÄT**
METHOD FOR OPERATING A FLOW METER AND FLOW METER
PROCÉDÉ DE FONCTIONNEMENT D'UN DÉBITMÈTRE ET DÉBITMÈTRE

(30) Priorität: 23.06.2016 DE 102016111509
(43) Veröffentlichungstag der Anmeldung: 27.12.2017
(73) Patentinhaber: Krohne Messtechnik GmbH, 47058 Duisburg (DE)
(72) Erfinder: Dabrowski, Markus, 47269 Duisburg (DE); Brockhaus, Helmut, 46145 Oberhausen (DE)
(74) Vertreter: Gesthuysen Patentanwälte

(56) Entgegenhaltungen:
- DE-A1- 102007 026 244
- DE-A1- 102011 076 838
- GB-A- 2 077 444
- JP-A- 2014 215 211
- US-A1- 2013 069 792
- HEMAL DESAI: "Foundation Fieldbus Devices & NAMUR NE 107 NE 107", 21 September 2011 (2011-09-21), XP055418137, Retrieved from the Internet <URL:http://www.fieldbus.org/images/stories/international/asiapacific/India/presentations/a2011_7_ff_devices__namur_107.pdf> [retrieved on 20171023]

## Beschreibung

Die Erfindung geht aus von einem Verfahren zum Betreiben eines Durchflussmessgeräts, wobei das Durchflussmessgerät wenigstens eine Diagnoseeinheit, eine Zählereinheit und eine Speichereinheit mit wenigstens einem Speicher aufweist, wobei die Zählereinheit zumindest das während eines Messvorgangs durch das Durchflussmessgerät hindurchtretende Gesamtvolumen eines Fluids bestimmt, und wobei die Zählereinheit für die Dauer eines zeitlich begrenzten Messvorgangs betrieben wird, wobei die Diagnoseeinheit wenigstens einen fehlerhaften oder fehlerfreien Zustand des Durchflussmessgeräts erkennt. Zudem geht die Erfindung auch aus von einem Durchflussmessgerät mit den zuvor genannten Eigenschaften.

Feldgeräte im Allgemeinen werden in der Prozess- und Automatisierungstechnik als Aktoren oder als Sensoren zur Bestimmung von Prozessvariablen eingesetzt, wobei die von dem Feldgerät bestimmte Information entweder zur Steuerung oder Regelung des Prozesses genutzt oder für den Prozess und/oder den Anwender anderweitig verfügbar gemacht wird, beispielsweise visuell dargestellt wird.

Um eine fehlerfreie Bestimmung von Messwerten zu garantieren, werden an Feldgeräte besonders hohe Anforderungen in Bezug auf ihre Funktionssicherheit/Fehleranfälligkeit sowie auf die Fehlerdiagnose gestellt. Tritt eine Funktionsstörung auf, so ist es für die Beurteilung der Qualität der von dem Feldgerät bestimmten Messwerte höchst relevant, dass dem Anwender die Funktionsstörung mitgeteilt wird, auch damit dieser entsprechende Maßnahmen zur Störungsbeseitigung ergreifen kann.

Aus dem Stand der Technik bekannt ist es daher, Feldgeräte mit einer Selbstüberwachung und/oder einer Selbstdiagnose zu betreiben, wodurch gewährleistet werden kann, dass im Falle einer Fehlfunktion, dies dem Nutzer unmittelbar mitgeteilt wird, sodass dieser die Qualität der ausgegebenen Messwerte beurteilen kann.

Die vorliegende Erfindung betrifft im Detail ein Verfahren zum Betreiben eines Durchflussmessgeräts, das insbesondere als Feldgerät eingesetzt werden kann. Erfindungsgemäß umfasst das Durchflussmessgerät eine Zählereinheit, welche direkt oder indirekt beispielsweise aus den Messwerten der Messgrö-ßen Massendurchfluss und Dichte eines Fluids einen Messwert für das durch das Durchflussmessgerät hindurchtretende aktuelle Volumen und darüber hinaus auch durch Aufsummieren das während eines zeitlich begrenzten Messvorgangs durch das Durchflussmessgerät hindurchtretende Gesamtvolumen bestimmt. Durch die Angabe des Gesamtvolumens kann jeder Zeitpunkt des Messvorgangs genau bestimmt werden. Insofern ist eine chronologische Abbildung auf den Messvorgang anhand des Gesamtvolumens möglich.

Die Diagnoseeinheit des Durchflussmessgeräts erkennt wenigstens einen fehlerhaften oder fehlerfreien Zustand des Durchflussmessgerätes. Fehlerhafte Zustände sind beispielsweise Defekte in der Elektronik, (unzulässige) Konfigurationsänderungen, Über- oder Unterschreitung der Betriebstemperatur, Abnutzung, unzulässige Vibrations- oder Stoßbelastung, usw. Eine Liste von fehlerhaften Zuständen von Feldgeräten ist in den NAMUR-Empfehlungen NE 107 aufgelistet.

Aus der DE 10 2007 026 244 A1 ist nun ein Verfahren zur Erstellung eines Fehlerprofils für ein Feldgerät, insbesondere für ein Durchflussmessgerät, bekannt, wobei das Fehlerprofil anwendungsspezifisch über eine Schnittstelle vom Nutzer definiert werden kann. Dabei wird das definierte Fehlerprofil in einem Speicher abgelegt und entsprechend vom Nutzer ausgewählte Fehlermeldungen werden im Fall ihres Auftretens vom Feldgerät ausgegeben. Die Druckschrift DE 10 2010 044 184 A1 offenbart ein Verfahren zum Erstellen einer Diagnose eines Feldgerätes einer Anlage, die eine Mehrzahl miteinander in Kommunikationsverbindung stehende Feldgeräte aufweist. Dabei wird von dem Feldgerät automatisch eine Diagnosemeldung erstellt und nach Befolgen eines Validierungsalgorithmus ausgewertet.

Die Druckschrift DE 10 2011 076838 A1 offenbart ein Verfahren zum Erstellen einer Diagnose eines Feldgerätes. Messwerte und Systemstatusmeldungen werden angezeigt und die akkumulierten Zustandsmeldungen werden gespeichert.

Nachteilig bei den zuvor dargelegten Verfahren ist es, dass die Fehlermeldungen jeweils nur unmittelbar also nur zu dem Zeitpunkt des Auftretens des Fehlers ausgegeben oder angezeigt werden. Es ist nicht möglich, das Auftreten bestimmter Fehler oder Fehlfunktionen mit zeitlichem Versatz nachzuvollziehen. Insbesondere das mehrfache kurzfristige Auftreten von unterschiedlichen Fehlermeldungen im Verlauf von einzelnen, zeitlich begrenzten Messvorgängen ist auch bei ständiger Überwachung des Feldgerätes nur schwer nachvollziehbar.

Ausgehend von dem zuvor dargelegten Stand der Technik ist es daher Aufgabe der vorliegenden Erfindung, ein Verfahren zum Betreiben eines Durchflussmessgerätes anzugeben, das eine besonders hohe Beobachtbarkeit und Zuverlässigkeit der während einzelner Messvorgänge bestimmten Messwerte gewährleistet.

Gemäß einer ersten Lehre der vorliegenden Erfindung wird die zuvor dargelegte Aufgabe durch ein eingangs genanntes Verfahren dadurch gelöst, dass die Diagnoseeinheit basierend auf dem Zustand des Durchflussmessgeräts wenigstens eine Zustandsmeldung erzeugt und die Zustandsmeldung zur Speichereinheit übertragen und in dem Speicher der Speichereinheit abgespeichert wird und dass sofern mehrere Zustandsmeldungen übertragen werden, diese kumulativ zumindest für die Dauer des Messvorgangs in dem Speicher der Speichereinheit abgespeichert werden.

Grundlegend wird in dem erfindungsgemäßen Verfahren angewendet, dass fehlerhafte oder fehlerfreie Zustände bei der Bestimmung einzelner Messwerte sich ebenfalls auf die Zuverlässigkeit von aus diesen Messwerten abgeleiteten Größen auswirken. Beispielsweise hat eine fehlerhafte Bestimmung des Massedurchflusses Auswirkung auf das daraus bestimmte Volumen des Fluids. Vorzugsweise enthält die von der Diagnoseeinheit ausgegebene Zustandsmeldung, sofern sie einer Fehlermeldung entspricht, auch eine Information bezüglich der Fehlerursache, wodurch dem Anwender die Fehlerbeseitigung vereinfacht wird.

Der Status der von der Zählereinheit bestimmten Messgröße entspricht vorzugsweise einer Aggregation von Zustandsmeldungen, die während des Messvorgangs aufgenommen werden.

Eine kumulative Speicherung der Zustandsmeldungen kann beispielsweise mittels einer "oder"-Verknüpfung einzelner Zustandsmeldungen realisiert werden.

Erfindungsgemäß wurde erkannt, dass die Bewertung eines gesamten Messvorgangs, bzw. die Bewertung von Messwerten, die während des Messvorgangs bestimmt werden, dadurch erfolgen kann, dass einzelne Zustandsmeldungen, die während der Dauer des Messvorgangs auftreten, kumuliert gespeichert werden, und dass diese Zustandsmeldungen nach Beenden des Messvorgangs dem Anwender zur Verfügung stehen. Besonders vorteilhaft ist es, dass die Zustandsmeldungen selbst dann zur Verfügung stehen, wenn beispielsweise der fehlerhafte Zustand des Durchflussmessgerätes nicht mehr andauert. Insgesamt kann mit dem erfindungsgemäßen Verfahren eine chronologische Dokumentation der Zustandsmeldungen bereitgestellt werden.

Gleichzeitig kann durch das erfindungsgemäße Verfahren sichergestellt werden, dass auch kurzzeitig auftretende Zustandsmeldungen, welche beispielsweise auf eine kurzzeitige Funktionsstörung hinweisen, nicht unbemerkt bleiben, sondern auch dann dem Anwender gemeldet werden, wenn die Funktionsstörung nicht mehr besteht. Insofern kann der Anwender auch nach dem Messvorgang Maßnahmen zur Störungsbeseitigung oder zur Verhinderung eines erneuten Auftretens einer bestimmten Zustandsmeldung ergreifen.

Im Ergebnis wird durch das erfindungsgemäße Verfahren ein besonders zuverlässiges Verfahren zur Bestimmung von Messwerten einzelner Messvorgänge bereitgestellt.

Gemäß einer ersten vorteilhaften Ausgestaltung wird der Speicher der Speichereinheit vor Beginn eines neuen Messvorgangs gelöscht. Damit kann sichergestellt werden, dass dem folgenden Messvorgang nicht fälschlicherweise Zustandsmeldungen zugeordnet werden, die nicht während dieses Messvorgangs aufgetreten sind. Die Zuverlässigkeit der Beurteilung einzelner Messvorgänge kann dadurch noch weiter erhöht werden. Besonders bevorzugt ist es, wenn wenigstens ein zweiter Speicher vorhanden ist und die im ersten Speicher hinterlegten Zustandsmeldungen auf den zweiten Speicher übertragen werden, bevor sie gelöscht werden.

Gemäß einer alternativen Ausgestaltung wird der Speicher der Speichereinheit nach Beenden des Messvorgangs gelöscht. Auch dann ist es von Vorteil, wenn ein zweiter Speicher vorhanden ist, in dem die hinterlegten Zustandsmeldungen gespeichert werden, bevor sie aus dem ersten Speicher gelöscht werden.

Weiterhin ist es vorteilhaft, wenn die Diagnoseeinheit eine Vielzahl von fehlerhaften oder fehlerfreien Zuständen erkennt, wenn die Diagnoseeinheit jeden Zustand mindestens einer genormten Statuskategorie zuordnet und wenn als Zustandsmeldung die Statuskategorie übertragen und in dem Speicher der Speichereinheit abgespeichert wird. Genormte Statuskategorien von Feldgeräten sind insbesondere den Namur-Empfehlungen NE 107 zu entnehmen. Demnach werden folgende Gerätezustände unterschieden:
- normal
- Wartungsbedarf
- Außerhalb der Spezifikation
- Funktionskontrolle
- Ausfall

Der Vorteil einer solchen Zuordnung ist es, dass die einzelnen Zustände insbesondere bezüglich ihrer Bedeutung klassifiziert werden. Denn nicht jede Zustandsmeldung erfordert Handlungsbedarf zur Störungsbeseitigung. Neben den zuvor genannten Statuskategorien ist die Anwendung von weiteren Kategorien zur Beurteilung des Messwertes bzw. des Messvorgangs möglich. Vorteilhaft sind ebenfalls zusätzliche Kategorien wie
- Anfangswert
- Wert übersteuert
- Wert untersteuert

Die genannte Aufzählung an Statuskategorien ist selbstverständlich nicht abschließend.

Zudem ist es vorteilhaft, wenn die Diagnoseeinheit den Zustand und die dem Zustand zugeordnete Statuskategorie als Zustandsmeldung in dem Speicher der Speichereinheit abspeichert. Diese Ausgestaltung berücksichtigt in vorteilhafter Weise, dass für unterschiedliche Anwender verschiedene Informationen relevant sind. Beispielsweise kann für einen Anwender lediglich die Information relevant sein, dass Wartungsbedarf besteht, während für einen weiteren Anwender der konkrete Zustand zur Fehlerbeseitigung von Interesse ist.

In einer nächsten Ausgestaltung des erfindungsgemäßen Verfahrens sind zumindest einzelne Zustände mehr als einer Statuskategorie zugeordnet. Dies ist beispielsweise dann sinnvoll, wenn eine Funktionsstörung die Folge hat, dass ein Messwert außerhalb des Spezifikationsbereichs liegt und gleichzeitig Wartungsbedarf des Durchflussmessgerätes besteht.

Alternativ ist es ebenfalls vorteilhaft, wenn jeder Zustand genau einer Statuskategorie zugeordnet wird. Wird dem Anwender nach einem Messvorgang eine bestimmte Statuskategorie mitgeteilt, so ist die Bestimmung der Fehlerursache aufgrund der eindeutigen Zuordnung gemäß dieser Ausgestaltung besonders einfach.

Gemäß einer nächsten Ausgestaltung wird dem Zustand und/oder der Statuskategorie ein Zählerwert zugeordnet und sowohl der Zustand und/oder die Statuskategorie als auch der zugehörige Zählerwert werden in dem Speicher der Speichereinheit abgespeichert. Ein solcher Zählerwert kann beispielsweise das aktuelle Gesamtvolumen sein. Dies hat den Vorteil, dass nach Beenden des Messvorgangs nicht nur dokumentiert ist, dass eine Zustandsmeldung vorlag oder vorliegt, sondern es kann ebenfalls nachvollzogen werden, wann diese Zustandsmeldung aufgetreten ist, wobei das "wann" keine exakte zeitliche Information ist, sondern der stetig sich fortentwickelnde Zählerstand. Diese Verfahrensvariante gewährleistet eine hohe Beobachtbarkeit des Zustands des Feldgeräts in Form eines Durchflussmessgeräts. Durch die Verknüpfung mit Zählerwerten ist eine besondere Zusatzinformation gegeben, die einen tieferen Einblick in mögliche Ursachen für das Auftreten der verknüpften Zustände gibt. Es ist insbesondere im Speicher der Speichereinheit eine chronologische bzw. am fortschreitenden Zählerstand orientierte Anordnung der Zustandsmeldungen hinterlegt. Der Anwender kann dann bei Auftreten bestimmter Zustandsmeldungen beurteilen, ob die nachfolgend bestimmten Messwerte ebenfalls von der Zustandsmeldung betroffen und insofern zu verwerfen oder anderweitig zu behandeln sind.

Weiterhin ist es vorteilhaft, wenn die Zählereinheit eine Anzeigeeinheit aufweist, und wenn die Zählereinheit die Zustandsmeldung insbesondere zusammen mit dem Zählerwert über die Anzeigeeinheit zumindest zeitweise ausgibt. Es ist zum Beispiel vorteilhaft, wenn die Zählereinheit die Zustandsmeldung, insbesondere mit dem Zählerwert, für die Dauer anzeigt, während der fehlerhafte oder fehlerfreie Zustand besteht. So wird der Anwender besonders schnell über eventuelle Fehlfunktionen öder Störungen informiert. Zudem kann der Anwender frühzeitig entscheiden, ob er einen fehlerbehafteten Messvorgang beenden oder vorzeitig abbrechen möchte.

Erfindungsgemäß stellt die Speichereinheit die akkumulierten Zustandsmeldungen während des zeitlich begrenzten Messvorgangs über eine Schnittstelle, vorzugsweise über eine Anzeigeeinheit oder eine interne Schnittstelle, fortwährend zur Verfügung.

Dazu weist die Speichereinheit vorzugsweise eine Anzeigeeinheit auf, über die die akkumulierten Zustandsmeldungen fortwährend oder zu mindestens einem Zeitpunkt innerhalb des Messvorgangs, wobei der mindestens eine Zeitpunkt nicht dem Ende des Messvorgangs entspricht, ausgegeben werden. Denkbar ist ebenfalls, dass die akkumulierten Zustandsmeldungen während eines Messvorgangs jederzeit über eine interne Schnittstelle abgerufen oder ausgegeben werden können. Basierend auf den Informationen, die der Anwender durch die akkumulierten Zustandsmeldungen bereits während des Messvorgangs erhält, kann er entscheiden, einen Messvorgang frühzeitig abzubrechen bzw. den Durchfluss zu stoppen, ohne die Messung kontinuierlich überwachen zu müssen.

Gemäß einer weiteren Ausgestaltung des Verfahrens wird mindestens einem Zählerwert, der innerhalb des Messvorgangs liegt, die bis zu diesem Zählerwert aufgetretenen akkumulierten Zustandsmeldungen zugeordnet, und die akkumulierten Zustandsmeldungen werden zusammen mit dem Zählerwert während des zeitlich begrenzten Messvorgangs über eine Schnittstelle, vorzugsweise über eine Anzeigeeinheit oder eine interne Schnittstelle, fortwährend zur Verfügung gestellt. Vorzugsweise weist die Speichereinheit hierzu eine Anzeigeeinheit auf, über die die akkumulierten Zustandsmeldungen zusammen mit dem Zählerwert fortwährend oder zu mindestens einem Zeitpunkt innerhalb des Messvorgangs, wobei der mindestens eine Zeitpunkt nicht dem Ende des Messvorgangs entspricht, ausgegeben werden. Denkbar ist ebenfalls, dass die akkumulierten Zustandsmeldungen zusammen mit dem Zählerwert während eines Messvorgangs jederzeit über eine interne Schnittstelle auf Anfrage abgerufen oder ausgegeben werden können. Basierend auf den Informationen, die der Anwender durch die akkumulierten Zustandsmeldungen und den Zählerwert bereits während des Messvorgangs erhält, kann er entscheiden, einen Messvorgang frühzeitig abzubrechen bzw. den Durchfluss des Fluids zu stoppen, ohne die Messung kontinuierlich überwachen zu müssen.

Gemäß einer weiteren Ausgestaltung des Verfahrens wertet die Diagnoseeinheit während des zeitlich begrenzten Messvorgangs die in der Speichereinheit akkumulierten Zustandsmeldungen aus und löst in Abhängigkeit von den aufgetretenen Zustandsmeldungen gerätespezifische Maßnahmen aus. Beispielsweise kann der Dosiervorgang bzw. der Durchfluss des zu messenden Fluids bei Auftreten wenigstens einer zuvor festgelegten Zustandsmeldung gestoppt werden.

In einer weiteren Fortbildung des Verfahrens ist vorgesehen, dass das Durchflussmessgerät die in der Speichereinheit akkumulierten Zustandsmeldungen nach Abschluss eines Messvorgangs über eine Datenschnittstelle des Durchflussmessgeräts ausgibt.

Gemäß einer weiteren Fortbildung des Verfahrens ist vorgesehen, dass die Diagnoseeinheit nach Abschluss eines zeitlich begrenzten Messvorgangs die in der Speichereinheit akkumulierten Zustandsmeldungen auswertet und erst zu diesem Zeitpunkt, also nach Abschluss des Messvorgangs, gerätespezifische Maßnahmen auslöst bzw. durchführt, wie beispielsweise die Außerbetriebsetzung des Geräts, insbesondere in Form der Blockierung weiterer Messvorgänge und/oder die Blockierung des Durchflusses des zu messenden Fluids. Diese Verfahrensweise hat den Vorteil, dass ein einmal begonnener, zeitlich begrenzter Messvorgang auch abgeschlossen werden kann. Dies ist besonders vorteilhaft, wenn das mit dem vorgeschlagenen Verfahren betriebene Messgerät im Rahmen einer Abfüllvorrichtung eingesetzt wird, wie z. B. einer Zapfanlage für Treib- oder Treibzusatzstoffe.

Gemäß einer zweiten Lehre der vorliegenden Erfindung wird die eingangs genannte Aufgabe auch gelöst durch ein Durchflussmessgerät mit einer Diagnoseeinheit zur Erkennung eines fehlerhaften oder fehlerfreien Zustandes des Durchflussmessgeräts und zur Erzeugung und Weiterleitung einer Zustandsmeldung, mit einer Zählereinheit zur Bestimmung des während eines Messvorgangs durch das Durchflussmessgerät hindurchtretende Gesamtvolumen eines Fluids und mit einer Speichereinheit mit wenigstens einem Speicher, wobei die Zustandsmeldung in dem Speicher der Speichereinheit abgespeichert wird und wobei sofern mehrere Zustandsmeldungen übertragen werden, diese kumulativ zumindest für die Dauer des Messvorgangs in dem Speicher der Speichereinheit abgespeichert werden.

Besonders bevorzugt ist das Durchflussmessgerät zur Durchführung eines der zuvor beschriebenen Verfahren ausgestaltet, es ist also durch geeignete Programmierung der Diagnoseeinheit so ausgestaltet, dass es im Betriebszustand das zuvor geschilderte Verfahren auch tatsächlich durchführt, es kann das verfahren also nicht nur aufgrund seiner hardwaremäßigen Ausstattung theoretisch durchführen.

Im Einzelnen gibt es nun eine Vielzahl von Möglichkeiten, das erfindungsgemäße Verfahren und das erfindungsgemäße Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein Ausführungsbeispiel eines erfindungsgemäßen Verfahrens und
- Fig. 2: ein Ausführungsbeispiel eines erfindungsgemäßen Durchflussmessgerätes.

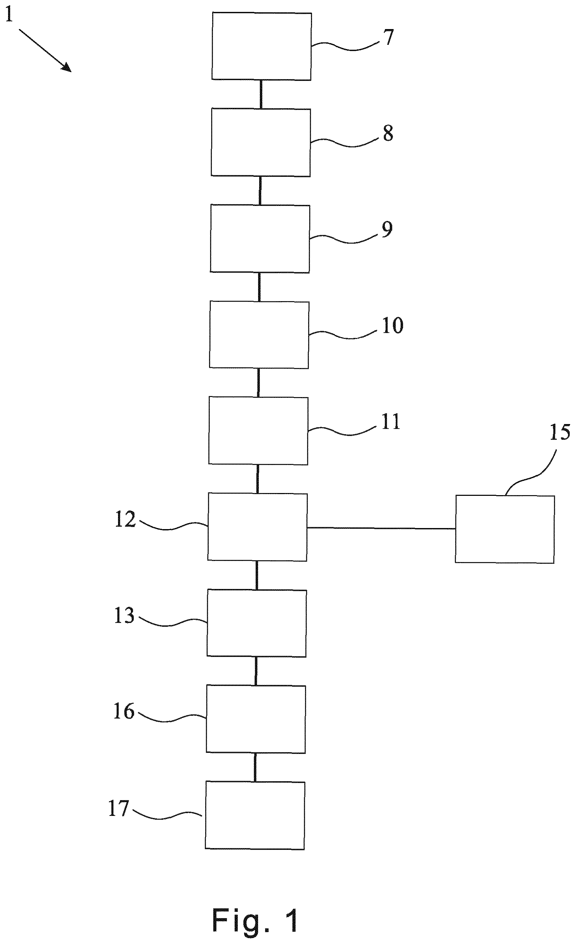

Fig. 1 zeigt ein erstes Ausführungsbeispiel eines erfindungsgemäßen Verfahrens 1 zum Betreiben eines Durchflussmessgerätes 2, wobei das Durchflussmessgerät 2 wenigstens eine Diagnoseeinheit 3, eine Zählereinheit 4 und eine Speichereinheit 5 mit wenigstens einem Speicher 6 aufweist, wobei die Zählereinheit 4 zumindest das während eines Messvorgangs durch das Durchflussmessgerät 2 hindurchtretende Gesamtvolumen eines Fluids bestimmt, und wobei die Zählereinheit 4 für die Dauer eines zeitlich begrenzten Messvorgangs betrieben wird.

Zunächst wird in einem ersten Schritt 7 vor Beginn eines zeitlich begrenzten Messvorgangs der Speicher 6 der Speichereinheit 5 gelöscht. Es kann sich beispielsweise um die Entnahme einer Flüssigkeit an einer Zapfsäule handeln.

In einem nächsten Schritt 8 erkennt die Diagnoseeinheit 3 einen fehlerhaften oder fehlerfreien Zustand des Durchflussmessgerätes 2 und erzeugt 9 basierend auf dem Zustand eine entsprechende Zustandsmeldung 9a.

In einem nächsten Schritt 10 ordnet die Diagnoseeinheit 3 den Zustand einer Statuskategorie gemäß den NAMUR-Empfehlungen NE 107 zu. Dabei erfolgt die Zuordnung derart, dass jeder Zustand genau einer Statuskategorie zugeordnet wird.

In einem nachfolgenden Schritt 11 übermittelt die Diagnoseeinheit 3 die Statusinformation und den Zustand als Zustandsmeldung 9a an die Zählereinheit 4. Diese ordnet der Statusinformation und der Zustandsmeldung 9a einen Zählerwert in Form eines aktuellen Gesamtdurchflusses zu 12 und leitet die Kombination aus Zählerwert, Statuskategorie und Zustand an die Speichereinheit 5 weiter 13. Gleichzeitig gibt die Zählereinheit 4 die Statuskategorie und den Zustand über eine Anzeigeeinheit 14 aus 15. Die Speichereinheit 5 speichert 16 die Statuskategorie und den Zustand zusammen mit dem Zählerwert.

Nach Beenden des Messvorgangs 17 steht dem Anwender eine chronologische Aggregation der aufgetretenen Zustandsmeldungen 9a zur Verfügung.

Das erfindungsgemäße Verfahren 1 stellt ein Verfahren 1 zum Betreiben eines Durchflussmessgerätes 2 zur Verfügung, welches eine besonders hohe Zuverlässigkeit der bestimmten Messwerte in zeitlich begrenzten Messvorgängen garantiert.

In dem erfindungsgemäßen Verfahren weist die Speichereinheit 5 eine Anzeigeeinheit 14 oder eine interne Schnittstelle auf, über die die Speichereinheit 5 bereits während des Messvorgangs die akkumulierten Zustandmeldungen 9a zusammen mit dem aktuellen Gesamtdurchfluss fortwährend ausgibt.

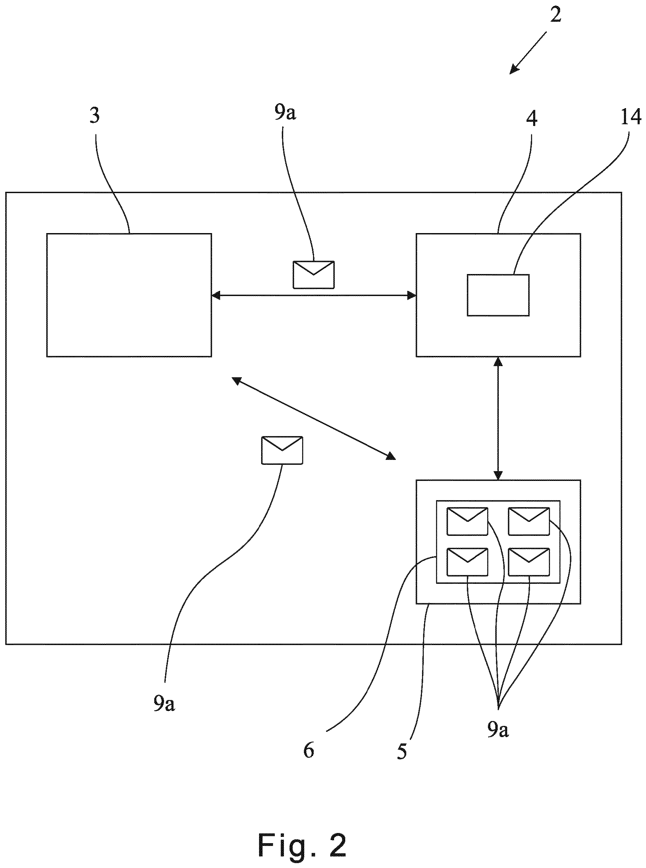

Fig. 2 zeigt ein Ausführungsbeispiel eines erfindungsgemäßen Durchflussmessgerätes 2 mit einer Diagnoseeinheit 3 zur Erkennung eines fehlerhaften oder fehlerfreien Zustandes und zur Erzeugung und Weiterleitung einer Zustandsmeldung, mit einer Zählereinheit 4 zur Bestimmung des durch das Durchflussmessgerät 2 hindurchtretenden Volumens und mit einer Speichereinheit 5 mit wenigstens einem Speicher 6, wobei die Zustandsmeldung 9a in dem Speicher 6 der Speichereinheit 5 abgespeichert wird und wobei sofern mehrere Zustandsmeldungen 9a übertragen werden, diese kumulativ zumindest für die Dauer des Messvorgangs in dem Speicher 6 der Speichereinheit 5 abgespeichert werden. Dabei ist das dargestellte Durchflussmessgerät 2 zur Durchführung eines erfindungsgemäßen Verfahrens ausgestaltet. Zudem weist die Zählereinheit 4 eine Anzeigeeinheit 14 auf, über welche die Zählereinheit 4 die Zustandsmeldung 9a ausgibt.

Im Detail ist das Durchflussmessgerät 2 derart ausgestaltet, dass die Zustandsmeldung 9a von der Diagnoseeinheit 3 entweder unmittelbar an die Speichereinheit 5 oder mittelbar über die Zählereinheit 4 an die Speichereinheit 5 übertragen werden kann. Dabei sind sämtliche Baueinheiten 3, 4, 5 derart ausgestaltet, dass sie als Sender oder Empfänger wirken können.

In einem nächsten Ausführungsbeispiel weist auch die Speichereinheit eine Anzeigeeinheit 14 oder eine interne Schnittstelle auf, über die die Speichereinheit 5 bereits während des Messvorgangs die akkumulierten Zustandmeldungen 9a zusammen mit dem aktuellen Gesamtdurchfluss fortwährend ausgibt.

### Bezugszeichen

- 1: Verfahren zum Betreiben eines Durchflussmessgeräts
- 2: Durchflussmessgerät
- 3: Diagnoseeinheit
- 4: Zählereinheit
- 5: Speichereinheit
- 6: Speicher
- 7: Löschen des Speichers der Speichereinheit
- 8: Erkennung eines fehlerhaften oder fehlerfreien Zustandes
- 9: Erzeugung einer Zustandsmeldung
- 9a: Zustandsmeldung
- 10: Zuordnung des Zustandes zu einer Statuskategorie
- 11: Übermittlung an die Zählereinheit
- 12: Zuordnung zu einem Zählerwert
- 13: Weiterleitung an die Speichereinheit
- 14: Anzeigeeinheit
- 15: Ausgabe der Statuskategorie und des Zustandes über eine Anzeigeeinheit
- 16: Speichern der Statuskategorie und des Zustands
- 17: Beenden des Messvorgangs

## Patentansprüche

1. Verfahren (1) zum Betreiben eines Durchflussmessgeräts (2) zur Durchführung einer Mehrzahl zeitlich begrenzter Messvorgänge, wobei das Durchflussmessgerät (2) wenigstens eine Diagnoseeinheit (3), eine Zählereinheit (4) und eine Speichereinheit (5) mit wenigstens einem Speicher (6) aufweist, wobei die Zählereinheit (4) zumindest das während eines Messvorgangs durch das Durchflussmessgerät (2) hindurchtretende Gesamtvolumen eines Fluids bestimmt, sodass durch die Angabe des Gesamtvolumens jeder Zeitpunkt des Messvorgangs genau bestimmt werden kann und eine chronologische Abbildung auf den Messvorgang anhand des Gesamtvolumens möglich ist, und wobei die Zählereinheit (4) für die Dauer eines zeitlich begrenzten Messvorgangs betrieben wird, umfassend die folgenden Verfahrensschritte:
Erkennung (8) von wenigstens einem fehlerhaften oder fehlerfreien Zustand des Durchflussmessgeräts (2) durch die Diagnoseeinheit (3), wobei
die Diagnoseeinheit (3) basierend auf dem Zustand wenigstens eine Zustandsmeldung (9a) erzeugt (9) und wobei die Zustandsmeldung (9a) zur Speichereinheit (5) übertragen und in dem Speicher (6) der Speichereinheit (5) abgespeichert wird,
wobei
sofern mehrere Zustandsmeldungen (9a) übertragen werden, diese kumulativ zumindest für die Dauer des Messvorgangs in dem Speicher (6) der Speichereinheit (5) abgespeichert werden **dadurch gekennzeichnet, dass**
die Speichereinheit (5) die akkumulierten Zustandsmeldungen (9a) während eines zeitlich begrenzten Messvorgangs über eine Schnittstelle fortwährend zur Verfügung stellt.

2. Verfahren (1) nach Anspruch 1, **dadurch gekennzeichnet, dass** der Speicher (6) der Speichereinheit (5) vor Beginn eines neuen Messvorgangs gelöscht wird (7).

3. Verfahren (1) nach Anspruch 1 oder 2, **dadurch gekennzeichnet, dass** die Diagnoseeinheit (3) eine Vielzahl von fehlerhaften oder fehlerfreien Zuständen erkennt, dass die Diagnoseeinheit (3) jeden Zustand mindestens einer genormten Statuskategorie zuordnet und dass als Zustandsmeldung (9a) die Statuskategorie übertragen und in dem Speicher (6) der Speichereinheit (5) abgespeichert wird.

4. Verfahren (1) nach Anspruch 3, **dadurch gekennzeichnet, dass** die Diagnoseeinheit (3) den Zustand und die dem Zustand zugeordnete Statuskategorie als Zustandsmeldung (9a) in dem Speicher (6) der Speichereinheit (5) abspeichert.

5. Verfahren (1) nach einem der Ansprüche 1 bis 4, **dadurch gekennzeichnet, dass** dem Zustand und/oder der Statuskategorie ein Zählerwert zugeordnet wird und sowohl der Zustand und/oder die Statuskategorie als auch der zugehörige Zählerwert in dem Speicher (6) der Speichereinheit (5) abgespeichert wird.

6. Verfahren (1) nach einem der Ansprüche 1 bis 5, **dadurch gekennzeichnet, dass** die Zählereinheit (4) eine Anzeigeeinheit (14) aufweist, und dass die Zählereinheit (4) die Zustandsmeldung (9a) über die Anzeigeeinheit (14) ausgibt.

7. Verfahren (1) nach einem der Ansprüche 1 bis 6, **dadurch gekennzeichnet, dass** die Speichereinheit (5) die akkumulierten Zustandsmeldungen (9a) während eines zeitlich begrenzten Messvorgangs über eine Anzeigeeinheit (14) oder eine interne Schnittstelle fortwährend zur Verfügung stellt.

8. Verfahren (1) nach einem der Ansprüche 5 bis 7, **dadurch gekennzeichnet, dass** mindestens einem Zählerwert, der innerhalb des zeitlich begrenzten Messvorgangs liegt, die bis zu diesem Zählerwert aufgetretenen akkumulierten Zustandsmeldungen (9a) zugeordnet werden, und dass die akkumulierten Zustandsmeldungen (9a) zusammen mit dem Zählerwert während des zeitlich begrenzten Messvorgangs über eine Schnittstelle, vorzugsweise über eine Anzeigeeinheit (14) oder eine interne Schnittstelle, fortwährend zur Verfügung gestellt werden.

9. Verfahren nach einem der Ansprüche 1 bis 8, **dadurch gekennzeichnet, dass** die Diagnoseeinheit (3) während des zeitlich begrenzten Messvorgangs die in der Speichereinheit akkumulierten Zustandsmeldungen (9a) auswertet und in Abhängigkeit von den aufgetretenen Zustandsmeldungen (9a) gerätespezifische Maßnahmen auslöst, insbesondere den Durchfluss des zu messenden Fluids bei Auftreten wenigstens einer zuvor festgelegten Zustandsmeldung stoppt.

10. Verfahren (1) nach einem der Ansprüche 1 bis 8, **dadurch gekennzeichnet, dass** die Diagnoseeinheit (3) nach Abschluss eines zeitlich begrenzten Messvorgangs die in der Speichereinheit (5) akkumulierten Zustandsmeldungen (9a) auswertet und erst zu diesem Zeitpunkt, also nach Abschluss des Messvorgangs, gerätespezifische Maßnahmen auslöst, insbesondere weitere Messvorgänge sperrt und/oder den Durchfluss des zu messenden Fluids blockiert.

11. Durchflussmessgerät (2) mit einer Diagnoseeinheit (3) zur Erkennung eines fehlerhaften oder fehlerfreien Zustandes und zur Erzeugung und Weiterleitung einer Zustandsmeldung (9a), mit einer Zählereinheit (4) zur Bestimmung des während eines Messvorgangs durch das Durchflussmessgerät (3) hindurchtretende Gesamtvolumen eines Fluids, sodass durch die Angabe des Gesamtvolumens jeder Zeitpunkt des Messvorgangs genau bestimmt werden kann und eine chronologische Abbildung auf den Messvorgang anhand des Gesamtvolumens möglich ist und mit einer Speichereinheit (5) mit wenigstens einem Speicher (6), wobei die Zustandsmeldung (9a) in dem Speicher (6) der Speichereinheit (5) abgespeichert wird und wobei sofern mehrere Zustandsmeldungen (9a) übertragen werden, diese kumulativ zumindest für die Dauer des Messvorgangs in dem Speicher (6) der Speichereinheit (5) abgespeichert werden,
**dadurch gekennzeichnet,**
die Speichereinheit (5) die akkumulierten Zustandsmeldungen (9a) während eines zeitlich begrenzten Messvorgangs über eine Schnittstelle fortwährend zur Verfügung stellt.

12. Durchflussmessgerät (2) nach Anspruch 11, **dadurch gekennzeichnet, dass** das Durchflussmessgerät (2) zur Durchführung eines Verfahrens (1) nach einem der Ansprüche 1 bis 10 ausgebildet ist.

## Claims

1. Method (1) for operating a flowmeter (2) for performing a plurality of time-limited measuring operations, wherein the flowmeter (2) has at least one diagnostic unit (3), a counter unit (4) and a memory unit (5) with at least one memory (6), wherein the counter unit (4) determines at least the total volume of a fluid passing through the flowmeter (2) during a measuring operation, so that by means of the specification of the total volume, each point in time of the measuring process can be determined precisely and a chronological mapping to the measuring process is possible on the basis of the total volume, and wherein the counter unit (4) is operated for the duration of a time-limited measuring process, comprising the following method steps:
determining (8) at least one faulty or fault-free state of the flowmeter (2) by the diagnostic unit (3),
wherein the diagnostic unit (3) generates (9) at least one status message (9a) based on the state, and
wherein the status message (9a) is transmitted to the memory unit (5) and stored in the memory (6) of the memory unit (5),
wherein, if several status messages (9a) are transmitted, these are stored cumulatively in the memory (6) of the memory unit (5) at least for the duration of the measuring process,
**characterized in**
**that** the memory unit (5) continuously makes the accumulated status messages (9a) available via an interface during a time-limited measuring process.

2. Method (1) according to claim 1, **characterized in that** the memory (6) of the memory unit (5) is deleted (7) before the start of a new measurement process.

3. Method (1) according to claim 1 or 2, **characterized in that** the diagnostic unit (3) detects a plurality of faulty or fault-free states, that the diagnostic unit (3) assigns each state to at least one standardized status category and that the status category is transmitted as a status message (9a) and stored in the memory (6) of the memory unit (5).

4. Method (1) according to claim 3, **characterized in that** the diagnostic unit (3) stores the status and the status category assigned to the status as a status message (9a) in the memory (6) of the memory unit (5).

5. Method (1) according to any one of claims 1 to 4, **characterized in that** a counter value is assigned to the state and/or the status category and both the state and/or the status category and the associated counter value are stored in the memory (6) of the memory unit (5).

6. Method (1) according to any one of claims 1 to 5, **characterized in that** the counter unit (4) has a display unit (14), and that the counter unit (4) issues the status message (9a) via the display unit (14).

7. Method (1) according to any one of claims 1 to 6, **characterized in that** the memory unit (5) continuously makes the accumulated status messages (9a) available during a time-limited measuring process via a display unit (14) or an internal interface.

8. Method (1) according to any one of claims 5 to 7, **characterized in that** the accumulated status messages (9a) which have occurred up to this counter value are assigned to at least one counter value which lies within the time-limited measurement process, and that the accumulated status messages (9a) are continuously made available together with the counter value during the time-limited measurement process via an interface, preferably via a display unit (14) or an internal interface.

9. Method according to any one of claims 1 to 8, **characterized in that** the diagnostic unit (3) evaluates the status messages (9a) accumulated in the memory unit during the time-limited measuring process and triggers device-specific measures in dependence on the status messages (9a) that have occurred, in particular stops the flow of the fluid to be measured when at least one previously defined status message occurs.

10. Method (1) according to any one of claims 1 to 8, **characterized in that** the diagnostic unit (3) evaluates the status messages (9a) accumulated in the memory unit (5) after completion of a time-limited measuring process and only triggers device-specific measures at this point in time, i.e. after completion of the measuring process, in particular blocks further measuring processes and/or blocks the flow of the fluid to be measured.

11. Flowmeter (2) with a diagnostic unit (3) for detecting a faulty or fault-free state and for generating and forwarding a status message (9a), with a counter unit (4) for determining the total volume of a fluid passing through the flowmeter (3) during a measuring operation, so that by means of the specification of the total volume, each time of the measuring process can be determined precisely and a chronological mapping of the measuring process is possible on the basis of the total volume, and with a memory unit (5) with at least one memory (6), wherein the status message (9a) is stored in the memory (6) of the memory unit (5) and wherein, if a plurality of status messages (9a) are transmitted, these are stored cumulatively in the memory (6) of the memory unit (5) at least for the duration of the measuring process,
**characterized in**
**that** the memory unit (5) continuously makes the accumulated status messages (9a) available via an interface during a time-limited measuring process.

12. Flowmeter (2) according to claim 11, **characterized in that** the flowmeter (2) is designed to carry out a method (1) according to any one of claims 1 to 10.

## Revendications

1. Procédé (1) permettant de faire fonctionner un débitmètre (2) pour effectuer une pluralité de processus de mesure limités dans le temps, dans lequel le débitmètre (2) présente au moins une unité de diagnostic (3), une unité de compteur (4) et une unité de mémoire (5) pourvue d'au moins une mémoire (6), dans lequel l'unité de compteur (4) détermine au moins le volume total d'un fluide passant par le débitmètre (2) pendant un processus de mesure de sorte que l'indication du volume total permet de déterminer exactement chaque instant du processus de mesure et qu'un mappage chronologique sur le processus de mesure est possible à l'aide du volume total, et dans lequel l'unité de compteur (4) fonctionne pendant la durée d'un processus de mesure limité dans le temps, comprenant les étapes de procédé suivantes consistant à :
identifier (8) au moins un état incorrect ou correct du débitmètre (2) par l'unité de diagnostic (3),
dans lequel l'unité de diagnostic (3) génère (9) au moins un message d'état (9a) sur la base de l'état, et dans lequel le message d'état (9a) est transmis à l'unité de mémoire (5) et est stocké dans la mémoire (6) de l'unité de mémoire (5),
dans lequel, dans la mesure où plusieurs messages d'état (9a) sont transmis, ils sont stockés de manière cumulée au moins pendant la durée du processus de mesure dans la mémoire (6) de l'unité de mémoire (5),
**caractérisé en ce que** l'unité de mémoire (5) fournit en continu par l'intermédiaire d'une interface les messages d'état (9a) accumulés pendant un processus de mesure limité dans le temps.

2. Procédé (1) selon la revendication 1, **caractérisé en ce que** la mémoire (6) de l'unité de mémoire (5) est effacée (7) avant le début d'un nouveau processus de mesure.

3. Procédé (1) selon la revendication 1 ou 2, **caractérisé en ce que** l'unité de diagnostic (3) identifie une pluralité d'états incorrects ou corrects, **en ce que** l'unité de diagnostic (3) attribue chaque état à au moins une catégorie de statut standardisé, et **en ce que** la catégorie de statut est transmise en tant que message d'état (9a) et est stockée dans la mémoire (6) de l'unité de mémoire (5).

4. Procédé (1) selon la revendication 3, **caractérisé en ce que** l'unité de diagnostic (3) stocke l'état et la catégorie de statut associée à l'état en tant que message d'état (9a) dans la mémoire (6) de l'unité de mémoire (5).

5. Procédé (1) selon l'une quelconque des revendications 1 à 4, **caractérisé en ce qu'**une valeur de compteur est associée à l'état et/ou à la catégorie de statut, et à la fois l'état et/ou la catégorie de statut et la valeur de compteur associée sont stockés dans la mémoire (6) de l'unité de mémoire (5).

6. Procédé (1) selon l'une quelconque des revendications 1 à 5, **caractérisé en ce que** l'unité de compteur (4) présente une unité d'affichage (14), et **en ce que** l'unité de compteur (4) émet le message d'état (9a) par l'intermédiaire de l'unité d'affichage (14).

7. Procédé (1) selon l'une quelconque des revendications 1 à 6, **caractérisé en ce que** l'unité de mémoire (5) fournit en continu les messages d'état (9a) accumulés pendant un processus de mesure limité dans le temps par l'intermédiaire d'une unité d'affichage (14) ou d'une interface interne.

8. Procédé (1) selon l'une quelconque des revendications 5 à 7, **caractérisé en ce que** les messages d'état (9a) accumulés, apparus jusqu'à cette valeur de compteur, sont associés à au moins une valeur de compteur qui se situe à l'intérieur du processus de mesure limité dans le temps, et **en ce que** les messages d'état (9a) accumulés sont fournis en continu avec la valeur de compteur pendant le processus de mesure limité dans le temps par l'intermédiaire d'une interface, de préférence par l'intermédiaire d'une unité d'affichage (14) ou d'une interface interne.

9. Procédé selon l'une quelconque des revendications 1 à 8, **caractérisé en ce que** l'unité de diagnostic (3) évalue pendant le processus de mesure limité dans le temps les messages d'état (9a) accumulés dans l'unité de mémoire et déclenche des mesures spécifiques à l'appareil en fonction des messages d'état (9a) apparus, en particulier en arrêtant le débit du fluide à mesurer lors de l'apparition d'au moins un message d'état défini auparavant.

10. Procédé (1) selon l'une quelconque des revendications 1 à 8, **caractérisé en ce qu'**à l'issue d'un processus de mesure limité dans le temps, l'unité de diagnostic (3) évalue les messages d'état (9a) accumulés dans l'unité de mémoire (5) et ne déclenche qu'à ce moment là, c'est-à-dire à l'issue du processus de mesure, des mesures spécifiques à l'appareil, en particulier en arrêtant des processus de mesure supplémentaires et/ou en bloquant le débit du fluide à mesurer.

11. Débitmètre (2) comprenant une unité de diagnostic (3) permettant d'identifier un état incorrect ou correct et de générer et retransmettre un message d'état (9a), une unité de compteur (4) permettant de déterminer le volume total d'un fluide passant par le débitmètre (3) pendant un processus de mesure, de sorte que l'indication du volume total permet de déterminer exactement chaque instant du processus de mesure et qu'un mappage chronologique sur le processus de mesure est possible à l'aide du volume total, et une unité de mémoire (5) pourvue d'au moins une mémoire (6), dans lequel le message d'état (9a) est stocké dans la mémoire (6) de l'unité de mémoire (5), et dans lequel, dans la mesure où plusieurs messages d'état (9a) sont transmis, ils sont stockés de manière cumulée au moins pendant la durée du processus de mesure dans la mémoire (6) de l'unité de mémoire (5),
**caractérisé en ce que** l'unité de mémoire (5) fournit en continu par l'intermédiaire d'une interface les messages d'état (9a) accumulés pendant un processus de mesure limité dans le temps.

12. Débitmètre (2) selon la revendication 11, **caractérisé en ce que** le débitmètre (2) est réalisé pour exécuter un procédé (1) selon l'une quelconque des revendications 1 à 10.
